## Europäisches Patentamt

## European Patent Office

## Office européen des brevets

(11) Veröffentlichungsnummer: **0 013 737**
**B1**

(12) **EUROPÄISCHE PATENTSCHRIFT**

(45) Veröffentlichungstag der Patentschrift:
**12.01.83**

(51) Int. Cl.³: **G 06 F 13/00**

(21) Anmeldenummer: **79105170.9**

(22) Anmeldetag: **14.12.79**

(54) **Mehrstufige Speicherhierarchie für ein Datenverarbeitungssystem.**

(30) Priorität: **26.01.79 US 6980**

(43) Veröffentlichungstag der Anmeldung:
**06.08.80 Patentblatt 80/16**

(45) Bekanntmachung des Hinweises auf die Patenterteilung:
**12.01.83 Patentblatt 83/2**

(84) Benannte Vertragsstaaten:
**BE CH DE FR GB NL SE**

(56) Entgegenhaltungen:
**DE-A-1 956 604**
**DE-A-2 359 178**
**DE-A-2 749 850**
**DE-B-1 931 966**
**DE-B-2 332 603**
**GB-A-1 354 800**
**GB-A-2 011 135**
**US-A-3 820 078**
**US-A-3 868 644**
**US-A-3 896 419**
**US-A-3 979 726**
**US-A-4 084 234**

(73) Patentinhaber: **International Business Machines Corporation, Armonk, N.Y. 10504 (US)**

(72) Erfinder: **Capozzi, Anthony Joseph, 1416 Livingston Place, Binghamton, New York 13903 (US)**

(74) Vertreter: **Rudolph, Wolfgang, Schönaicher Strasse 220, D-7030 Böblingen (DE)**

## Mehrstufige Speicherhierarchie für ein Datenverarbeitungssystem

Die Erfindung betrifft eine mehrstufige Speicherhierarchie nach dem Oberbegriff des Anspruchs 1.

Eine derartige Speicherhierarchie ist aus der US-A-4 084 234 bekannt. Die sehr schnellen Prozessoren grosser Datenverabeitungssysteme brauchen immer grössere und leicht zugängliche Speichersysteme. Um die hohen Arbeitsgeschwindigkeiten der Prozessoren voll nutzen zu können, muss der Speicher oder zumindest ein Teil des Speichers mit einer Geschwindigkeit arbeiten, die ziemlich dicht an derjenigen der Prozessoren liegt. Es ist jedoch sehr schwierig, einen beliebigen Datenblock in einem grossen Speicher mit grosser Geschwindigkeit auf wirtschaftliche Weise zuverlässig zu adressieren.

Eine Lösung dieses Problems besteht in der Verwendung einer zwei- oder mehrstufigen Speicherhierarchie, die einen kleinen ersten Cache-Speicher und einen oder mehrere grosse relativ langsamere Hauptspeicher enthält. Der Prozessor des Systems kommuniziert direkt mit dem Cache-Speicher im wesentlichen mit Systemgeschwindigkeit. Wenn vom Prozessor angeforderte Daten nicht im Cache-Speicher stehen, müssen sie im Hauptspeicher gesucht und in den Cache-Speicher übertragen werden, wo sie im allgemeinen dort stehende Datenblöcke ersetzen.

Ein typisches mehrstufiges Speichersystem auf Cache-Speicherbasis ist beschrieben in der US-Patentschrift 3 896 419. Das beschriebene System benutzt einen im Prozessor liegenden Cache-Speicher als Tabellenspeicher mit schnellem Zugriff zu vorher aus dem Hauptspeicher geholten Datenblöcken. In dem beschriebenen System werden jedoch keinerlei Verfahren zum Schreiben über eine Doppelwortgrenze beschrieben.

Damit ein solches System effektiv arbeiten kann, muss die Datenübertragung zwischen den Hauptspeichern, dem Cache-Speicher, den Kanälen usw. sowie Dateneingaben vom System (Kanäle, Prozessoren usw.) in den Cache-Speicher oder die Hauptspeicher von einem hochgradig wirksamen Speichersteuersystem gesteuert werden. Wenn die Datenübertragung nicht effektiv gehandhabt wird, gehen viele Vorteile der Benutzung eines sehr schnellen Cache-Speichers verloren.

In der US-A-4 084 234 ist bereits ein lokales Speichermodul beschrieben, das aus einem Rückgriffspeicher und einem Cache-Speicher besteht. Der Cache-Speicher ermöglicht schnellen Zugriff zu Informationen, die vorher vom Rückgriffspeicher in den Cache-Speicher geholt worden sind. Das lokale Speichermodul enthält ausserdem Steuerschaltungen, wodurch es ermöglicht wird, dass angeforderte Informationen von einem Befehlsmodul in den Rückgriffspeicher geschrieben werden, wenn die Steuerschaltung feststellt, dass die Information vorher in den Cache-Speicher eingeschrieben worden ist. Ausserdem ist in dieser US-A-4 084 234 ausgeführt, dass eine Schaltung vorhanden ist, die die Eingangsdaten, die durch einen Schreibbefehl in den Rückgriffspeicher geschrieben werden sollen mit gelesenen Daten vom Rückgriffspeicher mischt, wobei das Resultat sowohl in den Cache-Speicher als auch in den Rückgriffspeicher als Eingangsdaten eingeschrieben wird. Dadurch wird sichergestellt, dass exakt die gleichen Daten in den Cache-Speicher und in den Rückgriffspeicher eingeschrieben werden.

Die Schaltung zur Mischung ist mit einem Multi-Eingangsdatenselektorschalter verbunden, dessen Eingänge sowohl mit neuen Daten von der System-Schnittstelle als auch mit alten Daten vom Rückgriffspeicher beaufschlagt werden. Der Ausgang des Selektorschalters ist mit dem Cache-Speicher und dem Rückgriffspeicher verbunden, um die resultierenden gemischten Daten in diese beiden Speicher einschreiben zu können. Diese geschilderte Anordnung minimisiert die Anzahl der Datenwege und den technischen Aufwand für die Schaltkreise.

Ein besonderes Problem kann entstehen, wenn Daten von einem Kanal in den Speicher geschrieben werden oder besonders dann, wenn die zu schreibenden Daten in einem Wortteil über eine Doppelwortgrenze hinaus geschrieben werden sollen, d.h., wenn die Datensätze innerhalb von Doppelwörtern beginnen oder enden. In den meisten Systemen ist keine Teilschreibung über eine Doppelwortgrenze hinaus möglich, wodurch die Flexibilität des Systems eingeschränkt wird. In anderen Systemen sind solche Schreiboperationen zulässig, alle Datenmischungen müssen jedoch im Cache-Speicher ohne Rücksicht darauf erfolgen, ob die adressierte Stelle im Cache-Speicher steht oder nicht. Dadurch muss während der Schreiboperation der Cache-Speicher und im allgemeinen auch die Zentraleinheit voll genutzt werden. Ausserdem muss wenigstens eine Seite im Cache-Speicher benutzt werden, die anderweitig für Operationsdaten benutzt werden könnte.

Ein weiterer Nachteil eines solchen Systems besteht darin, dass die verschiedenen Takte (Kanal, Hauptspeicher, Cache-Speicher und Prozessor) synchron laufen müssen, dieselbe Anzahl von Pulswörtern und dieselben Taktzyklen haben müssen.

Der Erfindung liegt deshalb die Aufgabe zugrunde, ein mehrstufiges Speichersystem für ein Datenverarbeitungssystem mit einer Speichersteuerung, die effektive Teil-Schreiboperationen über eine Doppelwortgrenze vom Kanal zum Hauptspeicher gestattet, zu schaffen, das eine verbesserte Arbeitsgeschwindigkeit und erhöhte Zuverlässigkeit aufweist.

Die Lösung der Aufgabe ist im Kennzeichen des Anspruches 1 angegeben. Weitere Ausgestaltungen sind in den Unteransprüchen 2 bis 4 angegeben.

Das zweistufige Speichersystem ist mit einer integrierten Steuerung für die Datenübertragung innerhalb des Systems ausgerüstet. Der Speicher umfasst einen relativ kleinen, sehr schnellen Cache-Speicher zur Zusammenarbeit mit dem Prozessor in Prozessorgeschwindigkeit und einen relativ grossen, aber langsameren Hauptspeicher. Wenn von einem Kanal in den Hauptspeicher teilweise über eine Doppelwortgrenze hinausgeschrieben werden soll, wird zuerst festgestellt, ob die Adresse im Cache-Speicher steht, auf die die Daten geschrieben werden sollen. Wenn die Adresse im Cache-Speicher steht, werden die Daten vom Kanal mit der vollen Seite von Datendoppelwörtern aus dem Cache-Speicher in einem Datenregister gemischt und die fortgeschriebene gemischte Cache-Speicherseite dann im Hauptspeicher gespeichert. Gleichzeitig wird die Seite im Cache-Speicher ungültig gemacht. Wenn die Datenadresse nicht im Cache-Speicher steht, werden die Daten vom Kanal über die IPU- und Datenregister gelesen und in einem Überlaufpuffer gespeichert (danach sind die IPU und der Cache-Speicher zur Ausführung anderer Operationen frei). Dann werden die zur Teilschreibung gehörenden Doppelwörter vom Hauptspeicher hereingebracht und in Hilfsregistern im Speichersystem gespeichert. Danach werden sie mit den Teildoppelwörtern im Überlaufpuffer vom Kanal gemischt und die fortgeschriebenen Daten in den Hauptspeicher zurückgespeichert.

Es wurde eine integrierte mehrstufige Speicherhierarchie für ein Datenverarbeitungssystem mit verbesserter Schreibkapazität vom Kanal zum Hauptspeicher beschrieben. Nach dem Erfindungsgedanken können Teilschreiboperationen über Doppelwortgrenzen hinaus und die zugehörigen Operationen in einem Minimum an erforderlicher Prozessorzeit abgewickelt und dadurch die Systemleistung verbessert werden.

Ein Ausführungsbeispiel der Erfindung ist in den beigefügten Zeichnungen dargestellt und wird anschliessend näher beschrieben.

Es zeigen:

Fig. 1 in einem Blockdiagramm den Datenfluss in einem zweistufigen Speichersystem, in dem die vorliegende Erfindung angewendet wird,

Fig. 2 in Blockform die Darstellung der Adressteilung eines Speicheradressregisters in einer erfindungsgemässen Speichersteuerung,

Fig. 3 in einem detaillierten Blockdiagramm die Speichersteuerung für einen Datenprozessor,

Fig. 4 in einem detaillierten Blockdiagramm die Datenbahnen bei einer Schreiboperation vom Kanal zum Speicher,

Fig. 5 in einer Tabelle Anfangs- und Endadresse, bei einem, eine Doppelwortgrenze überlaufenden Teilwort,

Fig. 6 und 7 in Zeitdiagrammen die Reihenfolge der Vorgänge für zwei Arten von Schreiboperationen vom Kanal zum Speicher und

Fig. 8 eine volle Datenseite mit einer darin stehenden Teilschreibung.

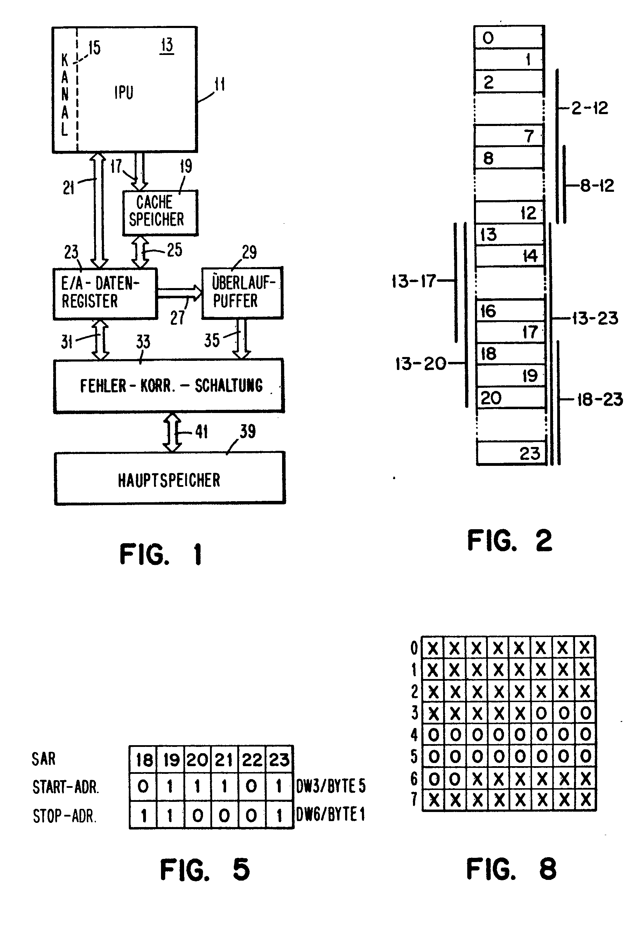

In Fig. 1 ist der Datenfluss für ein zweistufiges, die vorliegende Erfindung enthaltendes Speichersystem dargestellt. Das System besteht grundsätzlich aus dem Hauptprozessor 11, der die Instruktionsverarbeitungseinheit (IPU 13) und die angeschlossenen Kanäle 15 enthält. Eine Datenbahn 17 verbindet den Ausgang der IPU 13 mit einem Cache-Speicher 19. Eine bidirektionale Datenbahn 21 verbindet die IPU 13 mit einem EA-Datenregister 23. Eine weitere bidirektionale Datenbahn 25 verbindet den Cache-Speicher 19 und das EA-Datenregister 23. Das EA-Datenregister 23 ist über eine unidirektionale Datenbahn 27 mit einem Überlaufpuffer 29 und über eine bidirektionale Datenbahn 31 mit den Fehlerkorrekturschaltungen 33 verbunden. Der Überlaufpuffer 29 ist mit den Fehlerkorrekturschaltungen 33 durch eine unidirektionale Datenbahn 35 verbunden. Die Fehlerkorrekturschaltungen 33 sind über die Datenbahn 31 an das EA-Datenregister 23 zurückgeführt und über eine bidirektionale Datenbahn 41 mit dem Hauptspeicher 39 verbunden. Fig. 1 stellt also die allgemeinen Datenbahnen dar, die bei der Datenübertragung zwischen den verschiedenen Bestandteilen des Systems zulässig sind, insbesondere soweit sie mit der vorliegenden Erfindung zusammenhängen.

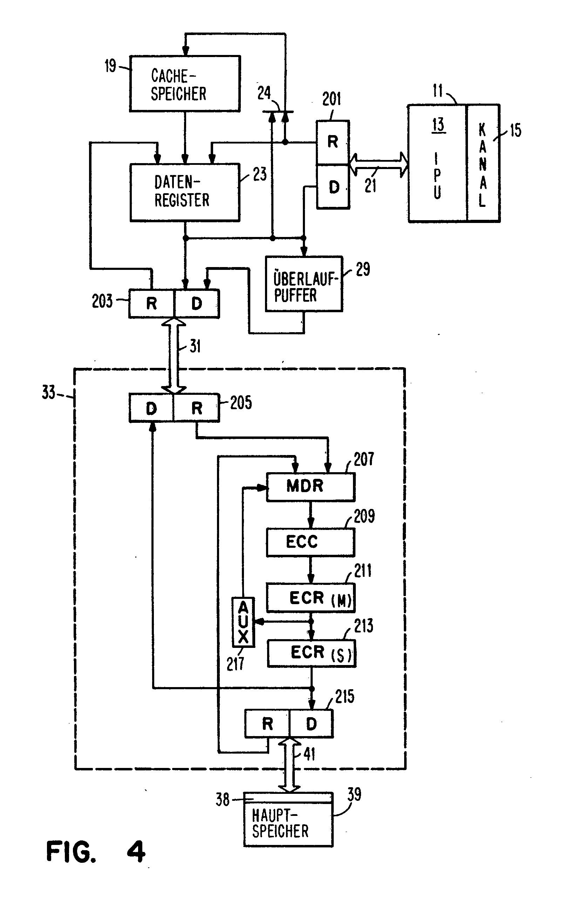

In Fig. 2 ist eine 24-Bit grosse Adresseinrichtung gezeigt, wie sie in einem für die vorliegende Erfindung geeigneten System verwendet werden könnte. In einem typischen System würde diese als Adresse eines Speicheradressregisters bezeichnet, mit der die Adressierung verschiedener Steuerungen im System gesteuert wird. In einer typischen Konfiguration würden die Bits 2 bis 12 die reale Adresse einer 2K-Seite im Speicher, die Bits 13 bis 17 eine Cache-Speicherseitenadresse, die Bits 18 bis 20 eine acht Byte grosse Zeile einer Cache-Speicherseite und die Bits 21 bis 23 ein Byte in einer gegebenen Zeile definieren. Die Bedeutung der Adressteilung wird klarer im Zusammenhang mit der Beschreibung der Adressiereinrichtung in Verbindung mit Fig. 4. Bei der vorliegenden Erfindung gilt das Hauptinteresse den Bits 18 bis 23, da jede Schreiboperation vom Kanal zum Speicher nicht länger als eine Seite ist.

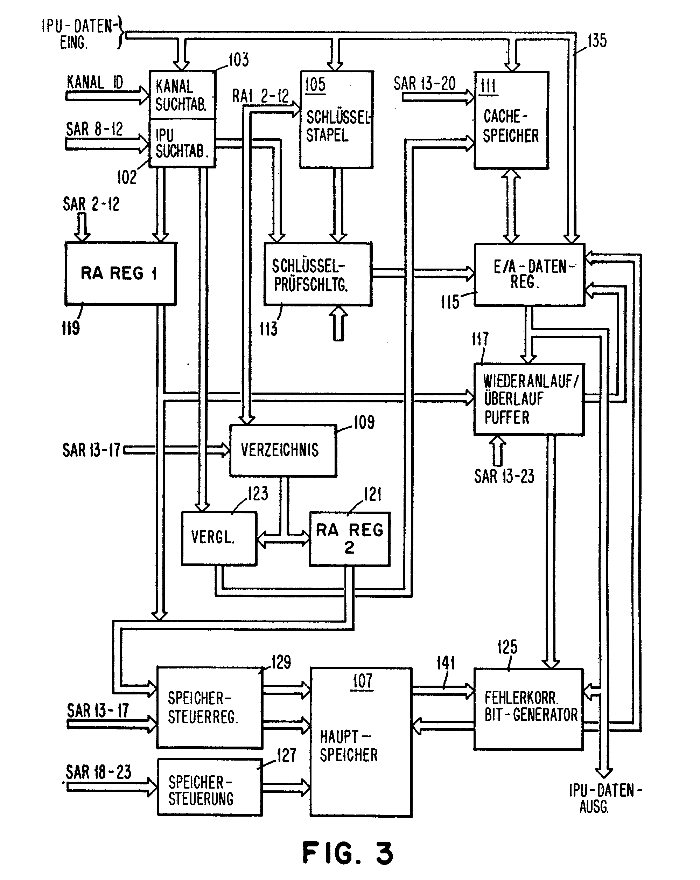

In Fig. 3 sind die verschiedenen Bestandteile der Speichersteuerung für ein zweistufiges System und deren Beziehung zum Cache-Speicher und Hauptspeicher gezeigt. Der Speicherdatenfluss ist ebenfalls angegeben. Das System enthält eine Prozessorverzeichnis-Suchtabelle (DLAT 102) und eine Kanalverzeichnis-Suchtabelle 103. Die DLAT 102 enthält in jeder Eintragung ein Feld für eine virtuelle und für eine reale Adresse sowie ein Abruf- und ein Statusbit. Die Kanalsuchtabelle 103 enthält die Eintragungen für die virtuelle zur realen Adressmöglichkeit des Kanals. Das System enthält ausserdem einen Schlüsselstapel 105 mit mehreren Eintragungen, die eine gegebene Seite im Hauptspeicher 107 darstellen. Das Cache-Verzeichnis 109 enthält mehrere Eintragungen mit merhfacher Assoziativmöglichkeit. Das Cache-Verzeichnis 109 kann z.B. Vier-Wegassoziativ sein und daher würde der Cache-Speicher 111 vier Datenbereiche enthalten. Jeder Bereich des Cache-Speichers 111 enthält mehrere Cache-Speicherseiten und er wird vom Speicheradressregister adressiert. Das System enthält weiterhin einen Schlüsselprüfer 113, ein Ein-/Ausgabe-Datenregister 115 und einen Überlaufpuffer 117. Die beiden Bestandteile des realen Adressregisters 119 und 121 werden nachfolgend mit RA1 bzw. RA2 bezeichnet. Die Steuerung enthält ausserdem einen Vergleicher 123 und einen Fehlerkorrektur-Bitgenerator 125. Eine Hauptspeichersteuerung 127 und Speichersteuerregister 129 sorgen für die Anschaltung an den Hauptspeicher 107.

Es wird angenommen, dass der Hauptspeicher eine Speicherkapazität von 2M Byte hat und der Cache-Speicher 111 1K Eintragungen von acht Byte Grösse in vier Datenbereichen mit je 32 Cache-Speicherseiten oder 256 Zeilen enthält. Für ein solches System enthält das Cache-Speicherverzeichnis 109 insgesamt 128 Eintragungen mit Vier-Weg-Assoziativität und der Schlüsselstapel hat 1K Eintragungen, wobei jede Eintragung eine 2K Seite im Hauptspeicher darstellt. Das Ein-/Ausgabe-Datenregister 115 wird als acht Byte grosses Datenübertragungs-Register beschrieben, das bei einer Speicher-Schreib-Operation die Prozessordaten empfängt und sie bei einer Speicher-Lese-Operation an den Prozessor sendet. Das Eingabe-/Ausgabe-Datenregister 115 bewegt auch die Daten zwischen den Schaltungsteilen in der Speichersteuerung.

Der Fehlerkorrekturbit-Generator 125 sorgt für die richtige Parität auf der Datenbahn zwischen Hauptspeicher 39 und Cache-Speicher 19. Das Verzeichnis 109 und die Verzeichnis-Suchtabellen 102 und 103 empfangen Adressen über das Speicheradressregister. Die Adressen können virtuell oder real sein. Das RA1-Register 119 und das RA2-Register 121 empfangen Adressen von der DLAT 102 und dem Verzeichnis 109 und adressieren in Verbindung mit dem SAR-Register den Hauptspeicher 107 über die Speichersteuer-Register 129.

Das Cache-Speicherverzeichnis 109 wird von den Speicheradress-Registerbits 13 bis 17 adressiert und gibt eine 64 Byte grosse Seite im Cache-Speicher an. Jede Eintragung enthält eine 11 Bit grosse reale Adresse und 3 Statusbits, von denen eines den gültigen oder ungültigen Status, eines den Modifikationsstatus und ein Bit den physischen Zustand der Cache-Speichereintragung anzeigen. Bei der Vier-Weg-Assoziativität stehen gleichzeitig im Cache-Speicher 111 vier Cache-Speicher-Seiten, die zu vier verschiedenen 2K Seiten gehören. Die Quelle der realen Adresse sind die realen Adressfelder von der Prozessorsuchtabelle 102 oder dem Speicheradressregister über das RA1-Register 119. Das Cache-Speicher-Verzeichnis zeigt an, wenn die gewünschte Seite im Cache-Speicher steht. Wenn sich die reale Adresse im Verzeichnis findet und ihre Eintragung gültig ist, stehen die Daten im Cache-Speicher. Das wird als Treffer bezeichnet. Wenn die reale Adresse nicht im Verzeichnis steht oder wenn ihre Eintragung ungültig ist, dann stehen die Daten nicht im Cache-Speicher. Das wird als Datenfehler bezeichnet. Bei einem Fehler muss der Hauptspeicher adressiert werden, um die gewünschten Daten von dort in den Cache-Speicher zu bringen.

Der 8K Bit grosse Cache-Speicher 111 ist in vier Teile unterteilt, die die Vier-Weg-Assoziativität mit dem Verzeichnis 109 definieren. Jeder Teil des Cache-Speichers enthält 32 Eintragungen zu je 64 Bytes. Der Cache-Speicher empfängt Daten vom EA-Datenregister 115 und von der IPU-Datensammelleitung 135. Die Ausgabe vom Cache-Speicher geht zum EA-Datenregister 115. Alle vier Datenbereiche des Cache-Speichers werden gleichzeitig vom Speicheradressregister mit den SAR-Adressbits 13 bis 17 adressiert, die die Seitenkomponente adressieren, und mit den Bits 18 bis 20, die die acht Byte grosse Zeilenkomponente adressieren. Eine endgültige Auswahl wird durch die Assoziativitätklasse vom Verzeichnis 109 getroffen, in dem der Treffer auftrat.

Im Betrieb werden Seiten mit 64 Byte in den Cache-Speicher 111 vom Hauptspeicher 107 nur bei den Befehlen geladen, bei denen ein Verzeichnisfehler auftreten kann, wobei die Daten über das EA-Datenregister 115 übertragen werden.

Der Überlaufpuffer 117 speichert nur jeweils eine Seite und dient zum Puffern der vom Cache-Speicher in einer Ausgabeoperation ausgegebenen Seite. Der Puffer speichert Syndrombits, die während eines Abrufs vom Hauptspeicher 107 erzeugt werden. Mit den Syndrombits werden vom Fehlerkorrektur-Bitgenerator 125 beim Lesen aus dem Speicher korrigierte Daten bezeichnet. Ausserdem dient der Überlaufpuffer zum Puffern von Kanaldaten bei Teilspeicheroperationen. Diese Doppelwörter, die bei einer Schreiboperation aus dem Cache-Speicher ausgelesen werden, bevor dessen Inhalt verändert wird, können in einem nicht dargestellten Wiederanlaufpuffer gespeichert werden.

Der Schlüsselstapel 105 enthält mehrere Eintragungen, die jeweils eine 2K Seite im Speicher darstellen. Jede Eintragung enthält einen Speicherschutzschlüssel, ein Abrufschutzbit und ein Referenzbit sowie ein Änderungsbit für die bezeichnete Seite. Die Eingabe für den Schlüsselstapel kommt von der EA-Datensammelleitung. Die Ausgabe vom Schlüsselstapel 105 wird mit den Signalen auf der Schlüsselsammelleitung 137 oder aus den beiden Schlüsselfeldern von der Prozessorsuchtabelle 102 verglichen. Der Schlüsselstapel empfängt auch eine Eingabe von der realen Adresskomponente 119, und zwar von deren Bits 2 bis 12.

Der Hauptspeicher mit einer typischen Speicherkapazität von einigen Megabytes sendet und empfängt Daten über den Fehlerkorrektur-Bitgenerator 125. Basierend auf Eingaben von der Speichersteuerung 127, von den realen Adresseinheiten 119, 121 und vom Speicheradressregister werden Daten aus dem Hauptspeicher ausgewählt. Daten von und zum Hauptspeicher werden in Einheiten von acht Bytes auf eine acht Byte grossen bidirektionalen Datensammelleitung übertragen, die den Fehlerkorrekturbit-Generator 125 mit dem Hauptspeicher verbindet. In einer erfindungsgemässen Konfiguration werden Eingaben vom Kanal immer direkt in den Hauptspeicher geschrieben und machen eine alte Cache-Speicher-Seite mit derselben Adresse ungültig, wenn sie zu der Zeit in dem Cache-Speicher steht, zu der der Kanal Daten in den Hauptspeicher schreibt. Umgekehrt schreibt der Prozessor immer in den Cache-Speicher, der dann gegebenenfalls Daten in den Hauptspeicher überträgt. Somit laufen der Hauptspeichertakt und der Kanaltakt im allgemeinen synchron, beispielsweise mit vier Pulsen in einer Zykluszeit von 150 nsec. Der Cache-Speicher-Takt und der Prozessor-Takt laufen zusammen und können einen Zyklus von 4, 6 oder 8 Pulsen haben.

Wie bereits gesagt, wird das acht Byte grosse Eingabe-/Ausgabedatenregister 115 zur Bewegung von Daten von und zum Prozessor/Kanal und zum Speicher verwendet. Die Ausgabe des Datenregisters kann zum Cache-Speicher-Eingang, zur Prozessor-Datensammel-Leitung, zum Überlaufpuffer (oder Wiederanlaufpuffer) und zum Fehlerkorrekturbit-Generator gehen. Das Datenregister kann vom Cache-Speicher-Ausgang, von der Prozessordaten-Sammelleitung, vom Fehlerkorrekturbit-Generator, von der Schlüsselgruppe, vom Wiederanlaufpuffer und vom Überlaufpuffer geladen werden.

Die reale Adresseinrichtung besteht aus dem RA1-Register 119 und dem RA2-Register 121. RA1 wird vom Speicheradressregister oder von den realen Adressfeldern der Verzeichnissuchtabellen 102, 103 geladen. RA2 wird von der realen Adresseintragung aus dem Verzeichnis 109 geladen, die übereinstimmt. Bei einem Treffer in der DLAT und einem Fehler im Verzeichnis wird die reale Adresse aus dem RA1-Register in den Hauptspeicher 107 geladen und gleichzeitig die SAR-Bits 13 bis 17 an den Hauptspeicher 107 gegeben, wobei die Adressbits vom RA1 eine gewählte 2K Seite adressieren und die Bits 13 bis 17 de gewählten 64 Bytes (Cache-Speicher-Seite). Die Ausgabe von der realen Adresskomponente kann auch auf den Eingang des Verzeichnisses zum Laden der realen Adresse, auf den Schlüsselstapel zum Lesen oder Speichern des Schlüssels und in den Wiederanlauf-/Überlaufpuffer gegeben werden, um reale Adressen zu speichern.

In Fig. 4 sind im einzelnen die Datenbahnen gezeigt, die während einer Schreiboperation vom Kanal über die IPU in den Hauptspeicher verfolgt werden. Gemäss Darstellung in Fig. 4 endet jede bidirektionale Datenbahn eigentlich in einer Empfänger/Treiber-Kombination, die zwischen die verschiedenen Geräte gelegt ist. Die bidirektionale Bahn von der IPU, beispielsweise zum System, geht auf der Leitung 21 zu dem Empfänger/Treiber-Paar 201. Die Ausgabe von R201 wird dann über das Tor 24 an den Cache-Speicher 19 und das Datenregister 23 angelegt. Der Rückweg geht vom Datenregister 23 über den Treiber 201 zur bidirektionalen Bahn 21 und zur IPU 13. Die Ausgabe vom Datenregister 23 kann auch durch die Torschaltung 24 zum Cache-Speicher 19 gesendet werden. In ähnlicher Weise verbindet ein Empfänger/Treiber-Paar 203 das Datenregister 23 und den Überlaufpuffer 29 mit der bidirektionalen Bahn 31, die zu den Fehlerkorrekturschaltungen 33 läuft, die ein abschliessendes Treiber/Empfänger-Paar 205 enthalten. Der Treiber 203 empfängt Eingaben vom Überlaufpuffer und dem Datenregister 23 und liefert eine Ausgabe an das Datenregister 23. Der Empfänger 205 liefert eine Ausgabe an das Datenregister 23. Der Empfänger 205 liefert eine Ausgabe an ein Speicherdatenregister 207, das wiederum die Fehlerkorrekturschaltung 209 speist. Die Ausgabe von der Fehlerkorrekturschaltung 209 wird an ein Fehlerkorrektur-Hauptregister 211 geleitet, das wiederum ein untergeordnetes Fehlerkorrekturregister 213 speist. Die bidirektionale Datenbahn 41 zwischen dem Puffer 38 des Hauptspeichers 39 und den Fehlerkorrekturschaltungen 33 endet in einem Empfänger/Treiber-Paar 215. Die Ausgabe vom untergeordneten Fehlerkorrekturregister 213 wird an den Treiber 215 angelegt, dessen Ausgabe an das Speicherdatenregister 207 zurückgegeben wird. Eine andere Ausgabe vom Fehlerkorrektur-Hauptregister 211 wird an ein Hilfregister 217 gegeben, dessen Ausgabe an das Speicherdatenregister 207 zurückgeleitet wird. Eine Ausgabe vom untergeordneten Fehlerkorrekturregister 213 wird auch an den Treiber 205 angelegt.

Zur Erklärung werden folgende Annahmen getroffen. Der Cache-Speicher 19 ist ein 8K Byte grosser Speicher mit Vier-Weg-Assoziativität, in dem jeder der vier Abschnitte 32 Seiten enthält. Jede Seite innerhalb des Cache-Speichers 19 enthält 64 Bytes, aufgeteilt auf acht verschiedene Cache-Speicherzeilen. Ein Doppelwort besteht aus acht Bytes und entspricht einer vollen Zeile in einer Cache-Speicherseite. Die Grundübertragung umfasst eine Cache-Speicherseite, d.h., es handelt sich um eine Datenübertragung von 64 Bytes. Für eine volle Übertragung von 64 Bytes entsprechend einer vollen Cache-Speicherseite werden beim Schreiben vom Kanal über die IPU in den Hauptspeicher 39 die Daten direkt in den Puffer 38 des Hauptspeichers 39 über das Datenregister 23 und die Fehlerkorrekturschaltungen 33 geschrieben, wobei der Überlaufpuffer 29 umgangen wird. Der Puffer 38 des Hauptspeichers 39 kann z.B. ein voller Puffer mit 64 Byte Breite sein. Wenn eine volle Seite vom Kanal durch die IPU in den Hauptspeicher 39 geschrieben wird und die Daten zufällig im Cache-Speicher 19 stehen, wird an die entsprechende Speicheradresse im Cache-Speicher 19 für diese Seite ein Ungültigkeitssignal gegeben.

Da der Kanal-Datenschreibbefehl eine Operation unterschiedlicher Länge von 1 bis 64 Bytes umfassen kann, gibt es andere Variationen der Kanalschreibung als das Schreiben einer vollen Seite. Eine solche Variation besteht z.B. aus einer Teilschreiboperation, wobei Anfangs- und Endadresse auf Doppelwortgrenzen stehen. In einem solchen Falle werden Teilschreibungen in den Überlaufpuffer 29 über das Datenregister 23 geladen und dann von dort in den Puffer 38 des Hauptspeichers 39 durch die Fehlerkorrekturschaltungen 33.

Der wichtigere Aspekt der vorliegenden Erfindung kommt zum Tragen, wenn eine Teilschreibung über die Doppelwortgrenze hinaus erfolgt, wobei entweder die adressierte Seite im Cache-Speicher steht oder nicht. Wenn die Seite im Cache-Speicher steht, wird die ganze Seite aus dem Cache-Speicher ausgelesen, im Datenregister 23 mit den vom Kanal kommenden Teildaten gemischt und in den Überlaufpuffer 29 geladen, von wo sie durch die Fehlerkorrekturschaltung 33 in den Puffer 38 des Hauptspeichers 39 gesendet wird. Die gemischten Daten vom Datenregister 23 können aber auch direkt durch die Fehlerkorrekturschaltung 33 in den Speicher gesendet werden. Ein Übertragungsraum-Signal wird zur entsprechenden Zeit angehoben, um das Mischen der Kanaldaten mit den Cache-Speicherdaten zu synchronisieren. Da der Cache-Speicher für die Durchführung dieser Mischung benutzt wird, kann die IPU die Operation erst fortsetzen, wenn die Mischung beendet ist und die IPU ein Fertigsignal erhält.

Wenn eine Teilwortschreibung über eine Doppelwortgrenze hinaus nicht im Cache-Speicher steht, müssen die zu mischenden Doppelwörter vorher aus dem Hauptspeicher geholt werden. Der Zugriff zum Hauptspeicher beginnt, während die Kanaldaten in den Überlaufpuffer 29 geladen werden. In diesem Fall erhält die IPU das Fertigsignal, wenn die Kanaldaten einmal in den Überlaufpuffer 29 geladen sind, und dann sind die IPU, der Kanal und der Cache-Speicher wieder frei, um mit anderen Operationen fortzufahren. Die tatsächliche Mischung erfolgt in den Fehlerkorrekturschaltungen 33 in Verbindung mit dem Überlaufpuffer 29 und dem Datenregister 23. Das stellt einen wesentlichen Vorteil der vorliegenden Erfindung dar, da (a) Teilschreibungen über Doppelwortgrenzen hinaus zulässig sind und (b) der grösste Teil der Mischoperation für Daten, die nicht im Cache-Speicher stehen, durchgeführt werden kann, ohne dass die IPU länger als nötig angebunden ist.

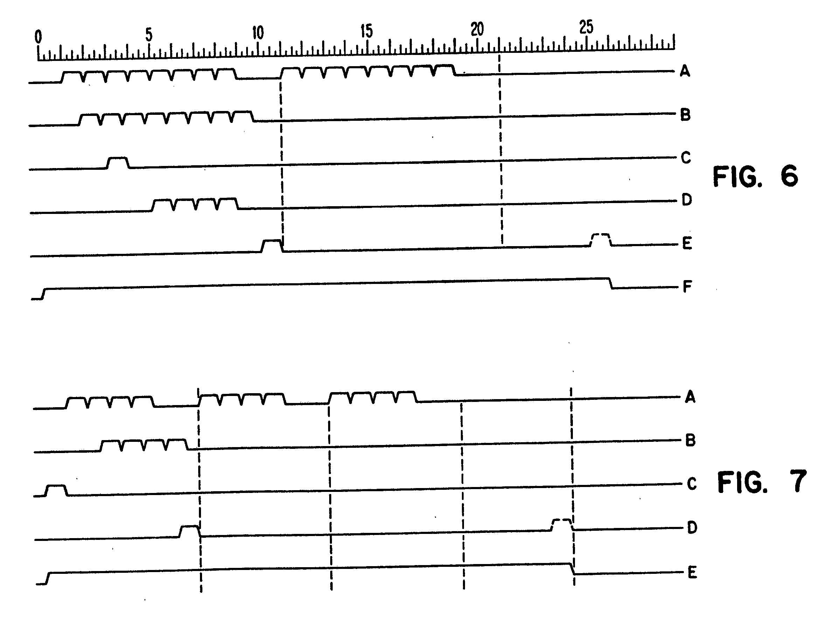

Zur besseren Erklärung wird ein Beispiel für eine Schreiboperation vom Kanal in den Hauptspeicher über eine Grenze hinaus beschrieben. Das Beispiel wird zuerst gegeben für den Fall, dass die Daten im Cache-Speicher stehen und dann für den Fall, dass sie nicht im Cache-Speicher stehen. Die Erklärung basiert auf den in Fig. 5 gezeigten Anfangs- und Endadressen. Die Adressen basieren auf den Speicheradress-Registerbits 18 bis 23 und haben die Startadresse 011101 entsprechend dem Doppelwort 3, Byte 5. Die Endadresse ist 110001 entsprechend dem Doppelwort 6, Byte 1. Die Lage dieser Adressen ist in Fig. 8 gezeigt, die das Äquivalent einer vollen Cache-Speicher-Seite darstellt, d.h. 64 Bytes, die die acht Doppelwörter 0 bis 7 umfasst, von denen jedes Doppelwort acht Informationbytes hat. Die mit «X» bezeichneten Bytebereiche betreffen Daten, die nicht durch die Teilschreiboperation des Kanals gestört werden und die «O» Bytes bezeichnen Datenbytes, die Teil der Kanalschreiboperation sind.

Zuerst wird also, wie gesagt, angenommen, dass die Seite, die die Daten über die Teilschreibung enthält, im Cache-Speicher steht. Eine Zeitfolge für diesen Fall ist in Fig. 6 gezeigt und wird in Verbindung mit dem Schaltbild der Fig. 4 näher beschrieben. Wenn die Operation einmal angefangen hat, ist das erste Signal ein Speicherbelegungssignal, dargestellt durch die Linie F in Fig. 6. Dieses Signal ist für die volle Dauer der Datenübertragung hoch, da der Speicher während der ganzen Übertragung belegt ist. Da die Daten im Cache-Speicher stehen, muss die ganze Cache-Speicherseite vom Cache-Speicher ausgelesen, durch das Datenregister 23 gesendet werden, wo die Teilschreibdaten aus dem Kanal darunter gemischt werden und dann im Überlaufpuffer gespeichert werden, bis die ganze Cache-Speicherseite ausgelesen ist. Danach wird der Überlaufpuffer entladen und die Daten im Speicher abgespeichert. Gleichzeitig wird die dieser Cache-Speicherseite entsprechende Adresse ungültig gemacht. Die ganze Cache-Speicherseite muss ausgelesen werden, weil einige Daten in dieser Seite evtl. während vorhergehender Operationen geändert oder fortgeschrieben wurden, d.h., die dieser Cache-Speicherseite entsprechenden Daten im Hauptspeicher sind nicht mehr gültig. Deswegen muss die ganze Cache-Speicherseite fortgeschrieben und im Hauptspeicher gespeichert werden.

Gemäss Darstellung durch die Linie A in Fig. 6 beginnt die Adressierung der Daten, die aus dem Cache-Speicher an das Datenregister zu senden sind, einen Taktzyklus nach Anhebung des Speicherbelegungssignals. Gemäss Darstellung durch Linie B in Fig. 6 wird ungefähr drei Taktimpulse nach dem Anheben des ersten Datenadressimpulses das erste Doppelwort aus dem Cache-Speicher in das Datenregister gelesen. Da dieses Doppelwort 0 nicht im Datenregister zu mischen ist, wird es direkt in den Überlaufpuffer übertragen. Diese Operation geht weiter, bis zum dritten nachfolgenden Systemzyklus, in dem gemäss Darstellung durch Linie C in Fig. 6 ein Kanalwarnimpuls gesendet wird, damit sich der Kanal zum Senden seiner Daten bereit macht. Ein Systemzyklus nach dem Absenden des Kanalwarnimpulses beginnt der Kanal gemäss Darstellung durch Linie D in Fig. 6 damit, die Daten zu senden, und die ersten vom Kanal gesendeten Daten entsprechen dem Doppelwort 3. In diesem Falle verändern nur die Bytes 5, 6 und 7 des Doppelwortes 3 das Doppelwort 3 aus dem Cache-Speicher, so dass durch Setzen der entsprechenden Schreibkennzeichen im Datenregister die Mischung erfolgt, und dann das neue Doppelwort 3 mit den gemischten Daten der Bytes 0 bis 4 aus dem Cache-Speicher und der Bytes 5, 6 und 7 aus dem Kanal in den Überlaufpuffer übertragen wird. Dieser Vorgang läuft weiter für das Schreiben der Doppelwörter 4 und 5 vom Kanal und das Mischen des Doppelwortes 6, und danach beendet die Übertragung des unveränderten Doppelwortes 7 aus dem Cache-Speicher in den Überlaufpuffer den Vorgang. Gemäss Darstellung durch die Linie E in Fig. 6 wird ein IPU-Fertigimpuls angehoben und der IPU dadurch mitgeteilt, dass Cache-Speicher und Datenregister für die weitere Benutzung frei sind. Der Rest der Speicheroperation wird im Speicher selbst abgeschlossen. Gemäss Darstellung in Fig. 6 wurden für die erste Schreiboperation vom Kanal zum Hauptspeicher 11 Maschinenzyklen benötigt.

Der nächste Teil der Operation besteht darin, den Überlaufpuffer zu entladen und die dort stehenden Daten in den Hauptspeicher zu schreiben. Nach Darstellung durch die Linie A in Fig. 6 werden dafür etwa 10 Maschinenzyklen benötigt, da die Daten durch den Empfängertreiber 203 zum Treiberempfänger 205, durch das Speicherdatenregister 207, die Fehlerkorrekturschaltung 209 und das Fehlerkorrektur-Hauptregister 211 geleitet werden müssen. Die Daten werden weiter durch das untergeordnete Fehlerkorrekturregister 213, den Empfängertreiber 215 und die bidirektionale Datensammelleitung 41 an den Puffer 38 des Hauptspeichers 39 geleitet. Ungefähr 4 Maschinenzyklen nach dem Entladen des Überlaufpuffers 29 und Übertragung der Daten in den Hauptspeicher 39 wird das durch die Linie F in Fig. 6 dargestellte Speicherbelegungs-Signal fallengelassen und ein zweiter IPU-Fertigimpuls, dargestellt durch die Linie E, gegeben. Dieser zweite Fertigimpuls wird jedoch nur gebraucht, wenn in der Zwischenzeit eine Speicheranforderung eingegangen ist. Eine solche Speicheranforderung würde mit einem Belegungssignal beantwortet, und die IPU müsste warten, bis sie einen Fertigimpuls empfängt, bevor sie wieder Zugriff zum Speicher bekommen kann.

Während die ganze Datenübertragungsoperation 26 Maschinenzyklen belegte, konnte die IPU nur während 11 dieser 26 Zyklen nicht weiterarbeiten. Während der letzten 16 Maschinenzyklen sind also die IPU 11, der Cache-Speicher 19 und das Datenregister 23 zur Ausführung weiterer Operationen frei. Die letzten 7 Zyklen der Operation werden gebraucht, um die Daten durch die Fehlerkorrekturschaltung 209 in den Speicherpuffer 38 und von dort in den Hauptspeicher 39 zu leiten.

Die Zeitdiagramme in Fig. 7 zeigen eine Teilspeicherung mit derselben Anfangs- und Endadresse wie oben, jedoch steht hier die die Daten enthaltende Seite nicht im Cache-Speicher. Daher müssen das Doppelwort 3 und das Doppelwort 6 der entsprechenden Seite vorher aus dem Hauptspeicher geholt werden, damit die Doppelwörter vollständig nach Bedarf gemischt werden können. Gemäss Darstellung in Fig. 7 sind nur vier Doppelwörter, nämlich die Wörter 3 bis 6, von dieser Operation betroffen, so dass die Zeitfolge gegenüber der in Fig. 6 gezeigten eine weitere Verbesserung aufweist.

Gemäss Darstellung durch Linie E in Fig. 7 wird als erstes Signal wieder das Speicherbelegungssignal angehoben. Ungefähr gleichzeitig wird der Kanalwarnimpuls gesendet, wie es durch Linie 10, Fig. 7 dargestellt ist, da die Datenübertragung am Anfang vom Kanal eingeleitet wird, weil der Cache-Speicher nicht adressiert wird. Einen Maschinenzyklus später werden die Datenübertragungsimpulse iniziiert, und kurz danach steht das erste betroffene Doppelwort im Datenregister 23 gemäss Darstellung durch die Linie B in Fig. 7. Während dieser Operation wurde auch der Hauptspeicher 39 adressiert, die entsprechenden Speicherdaten angesteuert und in den Hauptspeicherpuffer 38 geladen. Während der vier Maschinenzyklen werden die Daten vom Kanal in den Überlaufpuffer 29 übertragen. Gemäss Darstellung durch die Linie D in Fig. 6 wird ein Zyklus nach dem Ende dieser Übertragung ein IPU-Fertigsignal geben, damit die IPU, der Cache-Speicher und die übrige Schaltung zur Durchführung anderer Operationen freigegeben. Hier wurden also nur 7 Maschinenzyklen gebraucht, um die Information in den Überlaufpuffer 29 zu laden. Wenn der Überlaufpuffer 29 entsprechend geladen ist, werden im achten Maschinenzyklus die Doppelwörter 3 und 6 aus dem Hauptspeicher 39 geholt, wie es durch die Linie A in Fig. 7 gezeigt ist. Da nur zwei Doppelwörter vorher geholt werden, sind vier weitere Maschinenzyklen erforderlich, weil die Doppelwörter 4 und 5 zwar getaktet, aber nicht gelesen werden. Während dieser Zeit wird das Doppelwort 3 vom Speicherpuffer 38 geholt und in das Hilfsregister 217 gesetzt. Das Doppelwort 6 wird vom Puffer 38 geholt und in das Fehlerkorrektur-Hauptregister 211 gesetzt. Nach dieser Operation, beginnend ungefähr mit dem 13. Maschinenzyklus, fängt das Entladen des Überlaufpuffers 29 an. Zuerst werden das Doppelwort 3 vom Überlaufpuffer 29 und das im Hilfspuffer 217 gespeicherte Doppelwort 3 im Speicherdatenregister 207 gemischt und dann durch die Fehlerkorrekturschaltung 209 gesendet. Gleichzeitig wird das im Fehlerkorrektur-Hauptregister 211 gespeicherte Doppelwort 6 in das Hilfsregister 217 übertragen. Eine nachfolgende Operation fährt fort mit der Übertragung des nächsten Doppelwortes 4 vom Überlaufpuffer 29 durch den Empfängertreiber 203 an den Treiberempfänger 205 und durch das Hauptspeicher-Datenregister 207. Diese Operation läuft weiter, bis das Doppelwort 6 gebraucht wird. Dann wird es aus dem Hilfsregister 217 ausgelesen und mit dem Doppelwort 6 vom Überlaufpuffer 29 im Hauptspeicher-Datenregister 207 gemischt. Nach dem Entladen des Überlaufpuffers 29 braucht der Speicher ungefähr dieselbe Zeit für die Datenübertragung und die Entladung des Puffers 38 wie für die in Fig. 6 gezeigte Operation. Nach Darstellung durch die Linie E in Fig. 7 wird danach das Speicherbelegungssignal fallengelassen. Wenn inzwischen eine Speicheranforderung empfangen wurde, erzeugt das System wieder einen weiteren IPU-Fertigimpuls, wie es durch die Linie D in Fig. 7 gezeigt ist.

**Patentansprüche**

1. Mehrstufige Speicherhierarchie für ein Datenverarbeitungssystem mit einem kleinen, sehr schnellen Cache-Speicher und einem grossen, relativ langsamen Hauptspeicher, die beide gemeinsam von einem Speichersteuersystem gesteuert werden und in die vom Kanal des Datenverarbeitungssystems auch teilweise über Doppelwortgrenzen geschrieben wird, wobei der Kanal über eine bidirektionale Leitung an ein Datenregister angeschlossen ist, das seinerseits mit dem Cache-Speicher und dem Hauptspeicher bidirektional verbunden ist, ferner mit Mitteln zum Mischen von Kanaldaten mit in der Speicherhierarchie gespeicherten Daten, dadurch gekennzeichnet, dass das ein Doppelwort umfassende Datenregister (23) ausgangsseitig mit einem eine Seite umfassenden Überlaufpuffer (29) und eingangsseitig mit einer Empfänger/Treiber-Kombination (201) verbunden ist, welche ihrerseits über eine bidirektionale Leitung (21) mit dem Kanal (15) und ausgangsseitig über eine Torschaltung (24) mit dem Cache-Speicher (19) und direkt mit dem Überlaufpuffer (29) verbunden ist, dass das Datenregister (23) mit einer weiteren Empfänger/Treiber-Kombination (203) verbunden ist, die ausserdem Daten von dem Überlaufpuffer (29) erhält und Daten vom Hauptspeicher (39) über eine Fehlerkorrekturschaltung (33) an das Datenregister (23) bzw. umgekehrt leitet, dass beim Schreiben vom Kanal (15) in den Hauptspeicher (39) über eine Doppelwortgrenze hinaus zuerst festgestellt wird, ob die betreffende Seite, der die zu schreibenden Daten zugeordnet sind, im Cache-Speicher (19) steht, dass bei positivem Resultat die Daten vom Kanal (15) mit der vollen Seite von Doppelwörtern aus dem Cache-Speicher (19) in dem gemeinsamen Datenregister (23) gemischt werden und danach die fortgeschriebene gemischte Cache-Speicherseite in den Hauptspeicher (39) zur Speicherung übertragen wird, dass bei negativem Resultat die Daten vom Kanal (15) über das Datenregister (23) in den Überlaufpuffer (29) übertragen und gespeichert werden, wonach die beiden zur Teilschreibung gehörenden Doppelwörter vom Hauptspeicher (39) in Register (211, 217) der Fehlerkorrekturschaltung (33) gebracht werden und die im Überlaufpuffer (29) befindlichen Daten durch die Fehlerkorrekturschaltung (33) zum Hauptspeicher (39) übertragen werden, wobei eine Mischung der beiden Doppelwörter vom Hauptspeicher (39) mit den beiden Teildoppelwörtern vom Überlaufpuffer (29) erfolgt.

2. Mehrstufige Speicherhierarchie nach Anspruch 1, dadurch gekennzeichnet, dass zwischen zwei Empfänger/Treiber-Kombinationen (205 und 215) der Korrekturschaltung (33) ein zur Mischung herangezogenes Speicherdatenregister (207) angeordnet ist, das seinerseits eine Fehlerkorrekturschaltung (209) speist, die ihrerseits mit einem Fehlerkorrektur-Hauptregister (211) zum Speichern eines der beiden Doppelwörter verbunden ist, dessen Ausgang mit einem weiteren Fehlerkorrekturregister (213) und einem Hilfsregister (217) zum Speichern des anderen der beiden Doppelwörter verbunden ist, das seinerseits mit einem Eingang des Speicherdatenregisters (207) verbunden ist, und dass der Ausgang des Fehlerkorrekturregisters (213) mit beiden Empfänger/ Treiber-Kombinationen (205 und 215) verbunden ist.

3. Mehrstufige Speicherhierarchie nach den Ansprüchen 1 und 2, dadurch gekennzeichnet, dass der Cache-Speicher (19) ein Speicher mit Mehrweg-Assoziativität ist, in dem jeder der n Abschnitte m Seiten enthält, wobei jede Seite innerhalb des Cache-Speichers (19) eine bestimmte Anzahl Bytes enthält, die auf den Doppelwörtern zugeordnete Cache-Speicherzeilen aufgeteilt sind.

4. Mehrstufige Speicherhierarchie nach Anspruch 1, dadurch gekennzeichnet, dass bei positivem Resultat die gesamte Seite vom Datenregister (23) in den Überlaufpuffer (29) und von dort in den Hauptspeicher (39) übertragen wird.

**Claims**

1. Multilevel storage heirarchy for a data processing system, comprising a small, very fast cache memory and a large, relatively slow main memory which are controlled in common by a memory control system and into which data from the channel of the data processing system are partially written across double word boundaries, wherein the channel is connected by a bidirectional line to a data register which in turn is bidirectionally connected to the cache memory and the main memory, furthermore comprising means for merging channel data with the data stored in the storage heirarchy, characterized in that the data register (23) containing one double word has its output side connected to a swap buffer (29) containing one page and its input side to a receiver/driver combination (201) which in turn is connected by a bidirectional line (21) to the channel (15) and which has its output side connected by a gate circuit (24) to the cache memory (10) and which is directly connected to the swap buffer (29), that the data register (23) is connected to a further receiver/driver combination (203) which additionally receives data from the swap buffer (29) and transfers data from main memory (39) through an error correction circuit (33) to the data register (23) and vice versa, that when data from channel (15) are written into main memory (39) beyond a double word boundary, it is first of all determined whether the respective page with which the data to be written are associated is in the cache memory (19), that, if the result is positive, the data from channel (15) are merged with the full page of double words from the cache memory (19) in the common data register (23) and the updated cache memory page is then transferred to main memory (39) for storage, that, if the result is negative, the data from channel (15) are transferred through the data register (23) to the swap buffer (29) and stored, the two double words related to the partial write being subsequently transferred from main memory (39) to registers (211, 217) of the error correction circuit (33) and the data in swap buffer (29) being transferred by the error correction circuit (33) to main memory (39), whereby the two double words from main memory (39) are merged with the two partial double words from the swap buffer (29).

2. Multilevel storage hierarchy according to claim 1, characterized in that between two receiver/driver combinations (205 and 215) of the correction circuit (33) a memory data register (207) is arranged which is used for merging and which feeds an error correction circuit (209) which in turn is connected to an error correction master register (211) for storing one of the two double words, whose output is connected to a further error correction register (213) and an auxiliary register (217) for storing the other one of the two double words, which in turn is connected to an input of the storage data register (207), and that the output of the error correction register (213) is connected to the two receiver/driver combinations (205 and 215).

3. Multilevel storage heirarchy according to claims 1 and 2, characterized in that the cache memory (19) is a memory with multiway associativity, in which each of the n sections comprises m pages, each page within the cache memory (19) comprising a particular number of bytes divided into cache memory lines associated with the double words.

4. Multilevel storage heirarchy according to claim 1, characterized in that if the result is positive, the entire page is transferred from the data register (23) to the swap buffer (29) from where it is fed to main memory (39).

## Revendications

1. Hiérarchie de mémoire à plusieurs étages pour un système de traitement de données, comprenant une petite antémémoire très rapide et une importante mémoire principale relativement lente qui sont commandées en commun par un système de commande de mémoire et dans lesquelles des données issues du canal du système de traitement de données sont partiellement écrites au delà des limites des mots doubles, dans laquelle le canal est connecté par une ligne bidirectionnelle à un registre de données qui, à son tour, est bidirectionnellement connecté à l'antémémoire et à la mémoire principale, comprenant en outre des moyens pour rassembler les données du canal et les données emmagasinées dans la hiérarchie de mémoire, caractérisée en ce que, le registre de données (23) contenant un double mot a son côté sortie qui est connecté à une mémoire intermédiaire d'échange (29) contenant une page, et a son côté entrée qui est connecté à un ensemble récepteur/unité de commande (201) qui, à son tour, est connecté par une ligne bidirectionnelle (21) au canal (15) et dont le côté sortie est connecté par un circuit de porte (24) à l'antémémoire (10) et qui est directement connecté à la mémoire intermédiaire d'échange (29), en ce que le registre de données (23) est connecté à un autre ensemble récepteur/unité de commande (203) qui reçoit en outre des données de la mémoire intermédiaire d'échange (29) et transfère des données depuis la mémoire principale (39) par un circuit de correction d'erreur (33), au registre de données (23) et vice versa, en ce que, lorsque des données issues du canal (15) sont écrites dans la mémoire principale (39) au delà de la limite des mots doubles, on détermine tout d'abord si la page respective à laquelle les données à écrire sont associées, se trouve dans l'antémémoire (19), en ce que, si le résultat est positif, les données issues du canal (15) sont assemblées avec la page pleine de mots doubles depuis l'antémémoire (19) dans le registre de données commun (23) et en ce que la page d'antémémoire mise à jour est alors transférée à la mémoire principale (39) pour emmagasinage, en ce que, si le résultat est négatif, les données issues du canal (15) sont transférées par le registre de données (23) à la mémoire intermédiaire d'échange (29) et emmagasinées, les deux mots doubles concernés par l'écriture partielle étant ensuite transférés de la mémoire principale (39) aux registres (211, 217) du circuit de correction d'erreur (33) et les données de la mémoire intermédiaire d'échange (29) étant transférées par le circuit de correction d'erreur (33) à la mémoire principale (39), ce qui fait que les deux mots doubles issus de la mémoire principale (39) sont rassemblés avec les deux mots doubles partiels issus de la mémoire intemédiaire d'échange (29).

2. Hiérarchie de mémoire à plusieurs étages selon la revendication 1, caractérisée en ce que, entre deux ensembles récepteur/unité de commande (205 et 215) du circuit de correction (33), on a agencé un registre de données de mémoire (207) qui est utilisé pour l'assemblage et qui alimente un circuit de correction d'erreur (209) qui, à son tour, est connecté à un registre principal de correction d'erreur (211) pour l'emmagasinage de l'un des deux mots doubles, dont la sortie est connectée à un autre registre de correction d'erreur (213) et un registre auxiliaire (217) pour l'emmagasinage du deuxième des deux mots doubles, qui, à son tour, est connecté à une entrée du registre de que la sortie du registre de correction d'erreur (213) est connectée aux deux ensembles récepteur/unité de commande (205 et 215).

3. Hiérarchie de mémoire selon la revendication 1 ou 2, caractérisée en ce que, l'antémémoire (19) est une mémoire à associativité multiple, dans laquelle chacune des n sections comprend m pages, chaque page dans l'antémémoire (19) comprenant un nombre particulier de multiplets divisé dans des lignes d'antémémoire associés aux mots doubles.

4. Hiérarchie de mémoire selon la revendication 1, caractérisée en ce que, si le résultat est positif, la page entière est transférée du registre de données (23) à la mémoire intermédiaire d'échange (29) d'où elle est envoyée à la mémoire principale (39).

**FIG. 1**

**FIG. 2**

| SAR | 18 | 19 | 20 | 21 | 22 | 23 | |
|---|---|---|---|---|---|---|---|
| START-ADR. | 0 | 1 | 1 | 1 | 0 | 1 | DW3/BYTE 5 |
| STOP-ADR. | 1 | 1 | 0 | 0 | 0 | 1 | DW6/BYTE 1 |

**FIG. 5**

**FIG. 8**

**FIG. 3**

FIG. 4

FIG. 6

FIG. 7

0 013 737